# EUROPÄISCHE PATENTSCHRIFT

(11) **EP 0 867 620 B1**
(45) Veröffentlichungstag und Bekanntmachung des Hinweises auf die Patenterteilung: **13.11.2002**
(21) Anmeldenummer: 98105348.1
(22) Anmeldetag: 24.03.1998
(51) Int. Cl.: F04D 29/10, F16J 15/447

(54) **Umwälzpumpe oder Rührwerk für erwärmte chemische Lösungen**
Circulation pump or mixer for warm chemical solutions
Pompe à circulation ou agitateur pour solutions chimiques chaudes

(30) Priorität: 24.03.1997 DE 19712324
(43) Veröffentlichungstag der Anmeldung: 30.09.1998
(73) Patentinhaber: Renner GmbH, 75433 Maulbronn-Schmie (DE)
(72) Erfinder: Renner, Wolfgang, 75433 Maulbronn (DE)
(74) Vertreter: Twelmeier, Ulrich, Dipl. Phys.

(56) Entgegenhaltungen:
- EP-A- 0 173 030
- DE-A- 2 019 653
- FR-A- 1 132 810
- GB-A- 227 315
- GB-A- 840 671
- US-A- 1 672 013

## Beschreibung

Die Erfindung geht aus von einer Umwälzpumpe oder einem Rührwerk für erwärmte chemische Lösungen, insbesondere zur Verwendung in Anlagen für die chemische oder elektrochemische (galvanische) Metallabscheidung mit den im Oberbegriff des Anspruchs 1 angegebenen Merkmalen. Eine solche bekannte (zB. EP-A-0 173 030) Umwälzpumpe hat eine senkrecht verlaufende Welle, welche dazu bestimmt ist, in die chemische Lösung einzutauchen. Die Welle wird durch einen an ihrem oberen Ende angeordneten Elektromotor angetrieben und ist an ihrem unteren Ende mit Flügeln, einem Propeller oder mit Rührarmen versehen, je nach Zweckbestimmung als Umwälzpumpe oder Rührwerk. Der Motor befindet sich in einem Gehäuse, an dessen Unterseite die Welle austritt. An der Unterseite des Gehäuses ist ein stillstehendes Fußteil vorgesehen, durch welches die Welle hindurchtritt. Mit diesem Fußteil kann die Umwälzpumpe auf einem Deckel eines Behälters angebracht werden, in welchem sich die erwärmte chemische Lösung befindet. Zu diesem Zweck befindet sich in dem Deckel ein Loch, durch welches ein senkrechtes Tauchrohr in den Behälter hineinführt und in die chemische Lösung eintaucht. Das Tauchrohr hat am oberen Ende einen Flansch, mit welchem es auf dem Deckel des Behälters liegt. Mit diesem Flansch ist die Umwälzpumpe verschraubt, wobei das Fußteil auf dem Flansch ruht. Die vom Motor ausgehende Welle erstreckt sich auf diese Weise in das Tauchrohr hinein.

Für die chemische oder elektrochemische Metallabscheidung werden unterschiedliche, saure oder alkalische, wässrige Lösungen als Behandlungsbäder eingesetzt. Die Bäder werden zumeist bei einer oberhalb der Raumtemperatur liegenden Temperatur betrieben. Das hat zur Folge, daß aus den Bädern aggressive und teilweise gesundheitsschädliche Dämpfe aufsteigen. Um sie zurückzuhalten, haben die Behälter, in denen sich die Bäder befinden, üblicherweise einen Deckel. An den Stellen, an welchen sich eine Umwälzpumpe oder ein Rührwerk befindet, ist der Deckel unterbrochen. Damit an diesen Stellen dennoch die aufsteigenden Dämpfe zurückgehalten werden, müssen die Umwälzpumpen und Rührwerke abgedichtet werden. Bei unzureichender Abdichtung gelangen die Dämpfe nicht nur in die Werkshalle, sondern können auch in den Motor der Umwälzpumpe eindringen und diesen schädigen, sei es durch saure oder alkalische Bestandteile im Dampf, die zur Korrosion führen, oder sei es durch die Ablagerung von Inhaltsstoffen der Lösungen, indem die aufsteigenden Dämpfe, die solche Inhaltstoffe mit sich führen, zunächst an kälteren Teilen der Umwälzpumpe bzw. ihres Motors kondensieren und aus dem Kondensat in der Folge Inhaltsstoffe, vorwiegend Metallsalze, auskristallisieren. Das passiert nicht nur während des Betriebs der Umwälzpumpe, sondern auch in Betriebspausen, weil die Bäder üblicherweise rund um die Uhr beheizt werden.

Um dem geschilderten Problem zu begegnen, ist es bekannt, in einem Ringraum zwischen der Welle und dem Fußteil an der Unterseite des Motorgehäuses eine elastomere Dichtung vorzusehen, welche den Durchgang zwischen Welle und Fußteil lückenlos verschließt. Leider unterliegt diese Dichtung einem erheblichen Verschleiß, weil sich auch im Bereich der Dichtung Metallsalze ablagern, an welchen die Dichtung reibt. Die Reibung führt bald zu Undichtigkeiten, wobei der Verschleiß noch dadurch beschleunigt wird, daß eine erhebliche Reibungswärme erzeugt wird, die sowohl in die aus Kunststoff bestehende Dichtung als auch in die aus Kunststoff bestehende Welle eingeleitet wird und dazu führen kann, daß deren Temperaturbeständigkeit überschritten wird.

Bekannte Umwälzpumpen, die in chemischen oder elektrochemischen Beschichtungsantagen eingesetzt sind, müssen deshalb nach ungefähr 1000 Stunden ausgebaut und gewartet werden, wobei im allgemeinen nicht nur die Ablagerungen zu entfernen und die Dichtungen zu erneuern sind, sondern häufig noch weitere Teile der Umwälzpumpe oder die Umwälzpumpe komplett auszutauschen sind, weil sie durch hochgestiegene aggressive Dämpfe und Ablagerungen beschädigt sind.

Chemische und elektrochemische Anlagen für die Beschichtungstechnik, z.B. für die Herstellung von Schaltungsträgerplatten, werden aus Kostengründen häufig rund um die Uhr im 3-Schichtbetrieb betrieben. Stillstandszeiten der Anlage infolge von Wartungsarbeiten sind deshalb ein wesentlicher Kostenfaktor. Der vorliegenden Erfindung liegt deshalb die **Aufgabe** zugrunde, einen Weg aufzuzeigen, wie die Wartungsintervalle von Umwälzpumpen und Rührwerken der eingangs genannten Art verlängert werden können.

Diese Aufgabe wird gelöst durch Umwälzpumpen und Rührwerke mit den im Anspruch 1 angegebenen Merkmalen. Vorteilhafte Weiterbildungen der Erfindung sind Gegenstand der abhängigen Ansprüche.

Während im Stand der Technik die Sperrwirkung dadurch erzielt wird, daß ein geschlossener Dichtspalt vorliegt, d.h. ein Dichtspalt mit verschwindender Spaltbreite, schlägt die vorliegende Erfindung einen entgegengesetzten Weg ein, indem sie eine Sperre vorsieht, in welcher ein durch sich nicht berührende Oberflächen begrenzter, durchgehender Ringspalt gebildet ist. In diesen Ringspalt mit endlicher Spaltbreite können aufsteigende Dämpfe eindringen. Die den Ringspalt begrenzenden Oberflächen bieten den Dämpfen jedoch die Gelegenheit, an den kälteren Oberflächen des Ringspaltes zu kondensieren. Die Länge des Ringspaltes (darunter wird der Weg verstanden, den aufsteigende Dämpfe zurücklegen müssen, um von der einen, der chemischen Lösung zugewandten Seite, auf die andere, der chemischen Lösung abgewandten Seite der Dichtung zu gelangen) und die Spaltbreite des Ringspaltes sollen so aufeinander abgestimmt werden, daß praktisch alle Dämpfe, die in den Ringspalt eindringen, in diesem kondensieren können. Zu diesem Zweck hat der Ringspalt auf dem überwiegenden Teil seiner Länge vorzugsweise eine zwischen 0,5 mm und 1,5 mm betragende Spaltbreite und wird die Länge des Ringspalts mindestens zu 4 cm, noch besser mindestens zu 6 cm gewählt; besonders bewährt haben sich Ringspalte mit einer Länge von 6 bis 10 cm.

In dem erfindungsgemäß vorgesehenen Ringspalt können sich nun verstärkt Ablagerungen bilden, indem Salze aus dem Kondensat auskristallisieren. Der Nachteil, den die Ablagerungen im Stand der Technik haben, wird erfindungsgemäß in einen Vorteil umgemünzt, indem sie allmählich zu einer Verengung des Ringspaltes und damit zu einer Verbesserung seiner Sperrwirkung führen. Dazu ist es von Bedeutung, daß die Ablagerungen im Ringspalt zerrieben und verdichtet werden. Um das zu ermöglichen, sind die den Ringspalt begrenzenden Oberflächen keramische Oberflächen, insbesondere aus Aluminiumoxid oder Siliziumkarbid bestehend. Diese keramischen Oberflächen haben den Vorteil, unter der mahlenden Wirkung der Ablagerungen praktisch nicht zu verschleißen. Darüberhinaus zeichnen sie sich durch eine relativ geringe Wärmeleitfähigkeit und eine geringe thermische Ausdehnung aus. Die geringe Wärmeleitfähigkeit hat den Vorteil, die Übertragung der beim Mahlen der Ablagerungen erzeugte Reibungswärme auf angrenzende Kunststoffteile zu verhindern, so daß deren Temperaturbeständigkeit nicht überschritten wird. Das ist deshalb von Bedeutung, weil der Einsatz von Kunststoffteilen in der Nachbarschaft der keramischen Dichtung unumgänglich ist, denn metallische Werkstoffe sind in chemischen und elektrochemischen Bädern für die Metallabscheidung im allgemeinen verboten, weil sie Metallionen an die Bäder abgeben und sie dadurch unbrauchbar machen können. Die geringe Wärmedehnung der keramischen Oberflächen hat den Vorteil, daß die Reibungswärme im Ringspalt nicht zu Paßproblemen führt; ein Festfressen der den Ringspalt begrenzenden Oberflächen ist nicht zu befürchten.

Um das Kondensieren der Dämpfe im Ringspalt zu begünstigen, weist er vorzugsweise Strömungshindernisse (Schikanen) auf. Besonders günstig ist es, wenn der Ringspalt über seine Länge mäanderförmig verläuft. Durch die wiederholte Umlenkung der Strömung im Ringspalt wird die Verweildauer der Dämpfe im Ringspalt und die Wahrscheinlichkeit, daß sie mit einer der keramischen Oberflächen in Berührung kommen erhöht, zumal zwischen der Eintrittsseite und der Austrittseite des Ringspaltes praktisch keine Druckdifferenz besteht, die die Strömung im Ringspalt antreiben könnte.

Solange sich im Ringspalt noch keine Salze abgelagert haben, haben es die Dämpfe leichter, tief in den Ringspalt einzudringen. Um ihnen das Überwinden des Ringspaltes dennoch zu erschweren, ist in vorteilhafter Weiterbildung der Erfindung im Ringspalt eine Dichtpaste vorgesehen. Bei der Auswahl der Dichtpaste soll darauf geachtet werden, daß sie hinsichtlich der durch Dampfkondensation und Reibungswärme im Ringspalt entstehenden Temperatur hinreichend temperaturbeständig ist und hinreichend zähflüssig bleibt. Ferner ist darauf zu achten, daß die Paste sich mit der chemischen Lösung verträgt und zu diesem Zweck gegenüber dem Angriff der Lösung hinreichend beständig ist. Als Hauptbestandteil für die Dichtpaste eignet sich feines Polytetrafluoräthylenpulver, insbesondere eine Mischung aus einem solchen PTFE-Pulver und einem Silikon, die bis ca. 300°C verwendbar ist. Damit sich die Dichtpaste im Ringspalt über längere Zeit hält, sollte sich der Ringspalt nicht ausschließlich von unten nach oben erstrecken, sondern eine oder mehrere nach oben offene Ringnuten aufweisen, in welchen sich die Dichtpaste sammeln kann. Im einfachsten Fall könnte der Ringnut in der unteren keramischen Oberfläche ein ebener Bereich der oberen keramischen Oberfläche im geringen Abstand gegenüberliegen. Günstiger ist es jedoch, wenn die obere keramische Oberfläche mit einem ringförmigen, nach unten vorspringenden Kragen in die Ringnut der unteren keramischen Oberfläche eintaucht, was durch einen mäanderförmigen Verlauf des Ringspaltes leicht erreichbar ist. In diesem Fall müßte aufsteigender Dampf zunächst die Dichtpaste durchwandern, um den Ringspalt durchwandem zu können, was praktisch unmöglich ist. Die Dichtpaste reichert sich im Laufe der Zeit mit Ablagerungen an. Obwohl durch den Betrieb der Pumpe bzw. des Rührwerks ein Teil der Paste aus dem Ringspalt ausgetragen werden kann, geht die Sperrwirkung nicht verloren, weil gleichzeitig die Ablagerungen zunehmen, welche den Ringspalt verengen und die Kondensationsfläche vergrößem.

Erste Untersuchungen haben gezeigt, daß die Wartungsintervalle auf 8000 bis 12000 Betriebsstunden, also ungefähr um den Faktor 10 verlängert werden können. Bei den dann erfolgenden Wartungsarbeiten müssen die keramischen Oberflächen im allgemeinen nur von den Ablagerungen befreit, die den Ringspalt bildenden keramischen Körper aber nicht ausgetauscht werden, weil sie infolge ihrer Härte keinen nennenswerten Verschleiß zeigen.

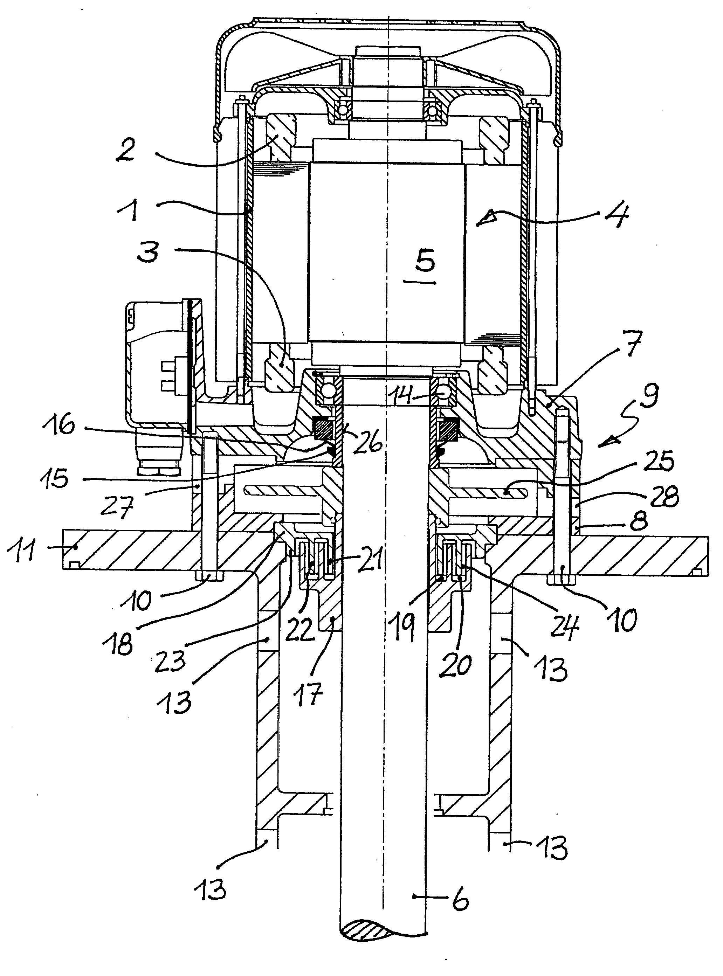

Ein Ausführungsbeispiel der Erfindung ist in der beigefügten Zeichnung dargestellt, welche einen Längsschnitt durch eine Pumpe oder ein Rührwerk zeigt.

In einem Gehäuse 1 ist auf Gummiringen 2 und 3 ein Elektromotor 4 schwingungsdämpfend gelagert. Der Läufer 5 des Motors setzt sich nach unten hin in eine Welle 6 fort, welche an ihrem unteren, nicht dargestellten Ende bei Ausbildung als Pumpe Flügel oder ein Turbinenrad, bei Ausbildung als Rührwerk Rührarme tragen kann.

An der Unterseite des Gehäuses ist ein aus zwei übereinander angeordneten Formteilen 7 und 8 aus Kunststoff bestehendes Fußteil 9 vorgesehen, welches durch Schrauben 10 mit dem Flansch 11 eines Rohres 12 aus Kunststoff verschraubt ist, welches die Welle 6 koaxial umgibt und Löcher 13 hat. Im oberen Formteil 7 ist die Welle 6 in einem Radialkugellager 14 gelagert und von einer elastomeren Dichtung 15 mit Dichtlippe 16 umgeben.

Zwischen der Welle 6 und dem unteren Formteil 8 des Fußteils 9 sind zwei berührungslos ineinandergreifende, ringförmige keramische Formteile 17 und 18 vorgesehen. Das untere Formteil 17 sitzt dicht und drehfest auf der Welle 6 und hat zwei nach oben offene Ringnuten 19 und 20. Das andere, obere Formteil 18 ist dicht und ortsfest an der Unterseite des Fußteils 9 bzw. dessen unteren Formteils 8 angebracht und hat drei sich achsparallel nach unten erstreckende ringförmige Kragen 21, 22 und 23, von denen die beiden inneren Kragen 21 und 22 in die Ringnuten 19 bzw. 20 des unteren keramischen Formteils 17 eingreifen, während sich der äußere Kragen 23 längs der äußeren Umfangsfläche des unteren Formteils 17 erstreckt. Auf diese Weise wird ein mäanderförmiger Dichtspalt 24 gebildet, dessen Verlauf viermal um 180° umgekehrt ist, wobei der dem Motor abgewandte Eintritt des Ringspaltes 24 radial außen und der dem Motor zugewandte Austritt des Ringspaltes 24 radial innen liegt, so daß die bei laufendem Motor wirkenden Zentrifugalkräfte dazu neigen, von unten her in den Ringspalt 24 eintretende Dämpfe und in der Folge die im Ringspalt 24 kondensierende Lösung nach außen zu treiben, vom Motorraum weg zurück in den Behälter, in welchen das Rohr 12 eintaucht, auf dessen nicht dargestellten Deckel es mit dem Flansch 11 zu befestigen ist.

Die durch den mäanderförmigen Verlauf gefaltete Länge des Ringspaltes 24 beträgt vorzugsweise zwischen 4 und 10 cm, wohingegen die Breite des Ringspaltes überwiegend zwischen 0,5 und 1,5 mm liegt. Um die Sperrwirkung des Ringspaltes 24 zu verbessern, ist in die Ringnuten 19 und 20 eine nicht dargestellte Paste eingefüllt, in welche die ringförmigen Vorsprünge 21 und 22 des oberen keramischen Formteils 18 eintauchen.

In einer oberhalb der keramischen Formteile 17, 18 im Fußteil 9 gebildeten Kammer befindet sich eine scheibenförmige Abschirmung 25 aus Kunststoff, welche zwischen einer Lagerbuchse 26 und dem unteren keramischen Formteil 17 eingespannt ist und sich mit der Welle 6 dreht. Sollten doch einmal aus irgendwelchen Gründen, z.B. wegen Überschreitens der Wartungsintervalle, aufsteigende Dämpfe den Ringspalt 24 überwinden, treffen sie auf die Abschirmung 25, werden längs dieser, unterstützt durch Fliehkraft, nach außen getrieben und durch Löcher 27, 28, welche am Umfang des Fußteils 9 verteilt sind, nach außen abgeführt und so vom Motorraum ferngehalten.

Als keramische Werkstoffe eignen sich für die Formteile 17 und 18 insbesondere Aluminiumoxid und Siliziumkarbid; diese Formteile können als Drehteile hergestellt werden. Für die anderen Bauteile, die mit den aggressiven chemischen Lösungen bzw. deren Dämpfen in Berührung kommen können, eignen sich chemisch beständige thermoplastische Kunststoff, insbesondere Polypropylen.

## Patentansprüche

1. Umwälzpumpe oder Rührwerk für erwärmte chemische Lösungen, insbesondere zur Verwendung in Anlagen für die chemische oder elektrochemische (galvanische) Metallabscheidung
- mit einer von oben nach unten verlaufenden Welle (6), welche dazu bestimmt ist, in die Lösung einzutauchen,
- mit einem am oberen Ende der Welle (6) angeordneten, die Welle (6) antreibenden Motor (4),
- mit einem den Motor (4) umgebenden Gehäuse (1), an dessen Unterseite die Welle (6) austritt,
- mit einem an der Unterseite des Gehäuses (1) vorgesehenen stationären Fußteil (9), durch welches die Welle (6) hindurchtritt,
- mit einem zwischen der Welle (6) und dem Fußteil (9) angeordneten Ringraum, und
- mit einer die Welle (6) umgebenden, in dem Ringraum angeordneten, zwischen der Welle (6) und dem Fußteil (9) wirksamen Sperre (24) für aus der chemischen Lösung aufsteigende Dämpfe,
**dadurch gekennzeichnet, daß** die Sperre (24) durch einen durch sich nicht berührende keramische Oberflächen begrenzten Ringspalt gebildet ist, in welchem die aufsteigenden Dämpfe kondensieren.

2. Umwälzpumpe oder Rührwerk nach Anspruch 1, **dadurch gekennzeichnet, daß** der Ringspalt (24) auf dem überwiegenden Teil seiner Länge eine zwischen 0,5 mm und 1,5 mm betragende lichte Weite hat.

3. Umwälzpumpe oder Rührwerk nach Anspruch 1 oder 2, **dadurch gekennzeichnet, daß** der Ringspalt (24) mindestens 4 cm lang ist.

4. Umwälzpumpe oder Rührwerk nach Anspruch 3, **dadurch gekennzeichnet, daß** der Ringspalt (24) mindestens 6 cm lang ist.

5. Umwälzpumpe oder Rührwerk nach Anspruch 4, **dadurch gekennzeichnet, daß** der Ringspalt (24) 6 bis 10 cm lang ist.

6. Umwälzpumpe oder Rührwerk nach einem der vorstehenden Ansprüche, **dadurch gekennzeichnet, daß** der Ringspalt (24) Strömungshindernisse aufweist.

7. Umwälzpumpe oder Rührwerk nach einem der vorstehenden Ansprüche, **dadurch gekennzeichnet, daß** der Ringspalt (24) mäanderförmig verläuft.

8. Umwälzpumpe oder Rührwerk nach einem der vorstehenden Ansprüche, **dadurch gekennzeichnet, daß** zu dem Ringspalt (24) eine nach oben offene Ringnut (19, 20) in einer der beiden keramischen Oberflächen gehört.

9. Umwälzpumpe oder Rührwerk nach Anspruch 8, **dadurch gekennzeichnet, daß** in die Ringnut (24) ein ringförmiger, nach unten vorspringender Kragen (21, 22) der anderen keramischen Oberfläche eintaucht.

10. Umwälzpumpe oder Rührwerk nach Anspruch 8 oder 9, **dadurch gekennzeichnet, daß** sich in der Ringnut (24) eine Paste befindet.

11. Umwälzpumpe oder Rührwerk nach Anspruch 10, **dadurch gekennzeichnet, daß** die Paste ein PTFE-Pulver enthält.

12. Umwälzpumpe oder Rührwerk nach Anspruch 10 oder 11, **dadurch gekennzeichnet, daß** die Paste ein Silikon enthält.

13. Umwälzpumpe oder Rührwerk nach einem der vorstehenden Ansprüche, **dadurch gekennzeichnet, daß** die keramischen Oberflächen aus Aluminumoxid oder Siliziumkarbid bestehen.

14. Umwälzpumpe oder Rührwerk nach einem der vorstehenden Ansprüche, **dadurch gekennzeichnet, daß** die Sperre (24) durch zwei vollständig aus Keramik bestehende Ringe (17, 18) gebildet ist.

## Claims

1. Circulation pump or mixer for warm chemical solutions, especially for use in installations for chemical or electrochemical (galvanic) metal depositon,
- having a shaft (6) which extends from above to below and which is intended to dip into the solution;
- having a motor (4) arranged at the upper end of the shaft (6) and driving the shaft (6);
- having a housing (1) enclosing the motor (4), with the shaft (6) projecting from the bottom side of said housing;
- having a stationary pedestal (9) provided at the bottom side of the housing (1), with the shaft (6) passing through such pedestal;
- having an annular space arranged between the shaft (6) and the pedestal (9); and
- having means (24) for blocking vapours that rise from the chemical solution, which surround the shaft (6) and which are arranged within the annular space between the shaft (6) and the pedestal (9),
**characterised in that** the blocking means (24) are constituted by an annular gap which is defined by mutually non-contacting ceramic surfaces and in which the vapours condense.

2. The circulating pump or mixer as defined in Claim 1, **characterised in that** the annular gap (24) has a clear width of between 0.5 mm and 1.5 mm over the greatest part of its length.

3. The circulating pump or mixer as defined in Claim 1 or Claim 2, **characterised in that** the annular gap (24) has a length of at least 4 cm.

4. The circulating pump or mixer as defined in Claim 3, **characterised in that** the annular gap (24) has a length of at least 6 cm.

5. The circulating pump or mixer as defined in Claim 4, **characterised in that** the annular gap (24) has a length of 6 to 10 cm.

6. The circulating pump or mixer as defined in any of the preceding claims, **characterised in that** the annular gap (24) comprises flow-obstruction means.

7. The circulating pump or mixer as defined in any of the preceding claims, **characterised in that** the annular gap (24) is meander-shaped.

8. The circulating pump or mixer as defined in any of the preceding claims, **characterised in that** the annular gap (24) comprises an upwardly open annular groove (19, 20) in one of the two ceramic surfaces.

9. The circulating pump or mixer as defined in Claim 8, **characterised in that** that the annular groove (19, 20) is engaged by an annular, downwardly projecting collar (21, 22) provided on the other ceramic surface.

10. The circulating pump or mixer as defined in Claim 8 or Claim 9, **characterised in that** a paste is provided in the annular groove (19, 20).

11. The circulating pump or mixer as defined in Claim 10, **characterised in that** the paste contains a PTFE powder.

12. The circulating pump or mixer as defined in Claim 11 or Claim 12, **characterised in that** the paste contains a silicone.

13. The circulating pump or mixer as defined in any of the preceding claims, **characterised in that** the ceramic surfaces consist of aluminium oxide or silicon carbide.

14. The circulating pump or mixer as defined in any of the preceding claims, **characterised in that** the blocking means (24) is formed by two rings (17, 18) made completely from a ceramic material.

## Revendications

1. Pompe à circulation ou agitateur pour solutions chimiques chaudes, en particulier pour utilisation dans des installations de déposition (galvanique) chimique ou électrochimique
- pourvu d'un arbre (6) passant verticalement de haut en bas, qui est destiné à être immergé dans la solution chimique,
- pourvu d'un moteur (4) disposé à son extrémité supérieure de l'arbre (6) et entraînant l'arbre (6),
- pourvu d'un boîtier (1) enveloppant le moteur (4), à la face inférieure duquel sort l'arbre 6),
- pourvu à la face inférieure du boîtier (1) d'un pied stationnaire (9) traversé par l'arbre (6).
- pourvu d'un espace annulaire entre l'arbre (6) et le pied (9), et
- pourvu d'un blocage (24) actif entre l'arbre (6) et le pied (9), disposé dans l'espace annulaire enveloppant l'arbre (6) pour les vapeurs ascendantes de la solution chimique,
**caractérisé en ce que** le blocage (24) est constitué d'une fente annulaire délimitée par des surfaces céramiques ne se touchant pas, dans lesquelles les vapeurs ascendantes se condensent.

2. Pompe à circulation ou agitateur selon la revendication 1, **caractérisé en ce que** la fente annulaire (24) a sur la majeure partie de sa longueur une ampleur légère se situant entre 0,5 et'1,5 mm.

3. Pompe à circulation ou agitateur selon la revendication 1 ou 2, **caractérisé en ce que** la fente annulaire (24) mesure au moins 4 cm de longueur.

4. Pompe à circulation ou agitateur selon la revendication 3, **caractérisé en ce que** la fente annulaire (24) mesure au moins 8 cm de longueur.

5. Pompe à circulation ou agitateur selon la revendication 4, **caractérisé en ce que** la fente annulaire (24) mesure 6 à 10 cm de longueur.

6. Pompe à circulation ou agitateur selon une des revendications précédentes, **caractérisé en ce que** la fente annulaire (24) présente des obstacles de circulation.

7. Pompe à circulation ou agitateur selon une des revendications précédentes, **caractérisé en ce que** la fente annulaire (24) présente un déroulement méandreux.

8. Pompe à circulation ou agitateur selon une des revendications précédentes, **caractérisé en ce que** la fente annulaire (24) comprend une rainure annulaire ouverte vers le haut (19, 20) dans une des deux surfaces céramiques.

9. Pompe à circulation ou agitateur selon la revendication 8, **caractérisé en ce que** un col annulaire proéminent vers le bas (21, 22) de l'autre surface céramique plonge dans la rainure annulaire (19, 20).

10. Pompe à circulation ou agitateur selon la revendication 8 ou 9, **caractérisé en ce qu'**une pâte se trouve dans la rainure annulaire (19, 20).

11. Pompe à circulation ou agitateur selon la revendication 10, **caractérisé en ce que** la pâte contient de la poudre de PTFE.

12. Pompe à circulation ou agitateur selon la revendication 10 ou 11, **caractérisé en ce que** la pâte contient une silicone.

13. Pompe à circulation ou agitateur selon une des revendications précédentes, **caractérisé en ce que** les surfaces céramiques se composent d'oxyde d'aluminium ou de carbure de silicium.

14. Pompe à circulation ou agitateur selon une des revendications précédentes, **caractérisé en ce que** le blocage (24) est formé de deux anneaux (17, 18) se composant complètement de céramique.
